# EUROPÄISCHE PATENTANMELDUNG

(11) **EP 1 039 186 A2**
(43) Veröffentlichungstag der Anmeldung: **27.09.2000**
(21) Anmeldenummer: 00101679.9
(22) Anmeldetag: 02.02.2000
(51) Int. Cl.: F16K 1/52, F16K 1/02, F16K 27/02

(54) **Ventil mit Ventilstift**

(30) Priorität: 22.03.1999 DE 19912818
(71) Anmelder: KERMI GmbH, 94447 Plattling (DE)
(72) Erfinder: Fonfara, Harald, 94551 Lalling (DE); Räcker, Günther, 94560 Offenberg (DE); Lauster, Peter, 94526 Metten (DE)
(74) Vertreter: Schwabe - Sandmair - Marx

(57) **Zusammenfassung**

Die Erfindung betrifft ein Ventil, insbesondere ein Heizkörperventil oder ein Thermostatventil, das mit einer Federeinrichtung (20), einem Ventilstift (22), der von der Federeinrichtung (20) vorbelastet werden kann und einem Ventilteller (29) am Endbereich des Ventilstiftes (22) ausgebildet ist, wobei erfindungsgemäß der Ventilstift (22) aus Kunststoff hergestellt werden kann.

## Beschreibung

Die Erfindung betrifft ein Ventil, insbesondere als Heizkörperventil oder als Thermostatventil für Heizkörper, gemäß dem Patentansprüche 1, bzw. gemäß dem Patentanspruch 2. Ferner betrifft die Erfindung ein Verfahren gemäß dem Patentanspruch 10 zur Herstellung eines Ventils und insbesondere eines Ventils gemäß einem der Ansprüche 1 bzw. 2.

Ganz besonders bei Heizkörpern finden Ventile bzw. Thermostatventile zur Regelung des Durchflusses des Heizmediums Anwendung. Derartige Ventile werden bislang aus Metall gefertigt, wobei diverse Fräs- und Dreharbeiten sowie Justierungsarbeiten erforderlich sind, um ein Ventil herzustellen, das mit seinen Spezifikationen innerhalb eines zulässigen Toleranzbereiches liegt. Das heißt, die Einstellung eines Ventilstiftes im Verhältnis zu einer Rücktriebsfeder und die Längenabmessungen des Ventilstiftes gegenüber dem Ventilsitz, der dem Ventilteller am Ventilstift zugeordnet ist, müssen relativ exakt durch komplizierte Bearbeitung und Justierung eingestellt werden. Eine derartige Vorgehensweise ist äußerst kostspielig und führt auch zu einem relevanten Ausschuß, der einen bemerkenswerten Kostenfaktor darstellt.

Eine weitere Problematik herkömmlicher Ventile ist darin zu sehen, daß die aus Metall hergestellten Bestandteile innerhalb des Heizmediums, das elektrisch leitend ist, als galvanische Elemente funktionieren, so daß es zu Materialwanderungen kommt. So gibt es bereits nach kurzen Funktionsdauern herkömmlicher Ventile Ablagerungen an dem Ventilstift, die dazu führen, daß ganz besonders nach längerem unbenutztem Stillstand, beispielsweise über die Sommerperiode, ein Ventilstift in seiner Führung festsitzt oder es aufgrund der Rauhigkeit des Stiftes zu einem die Dichtigkeit des Ventils gefährdenden Abrieb an den O-Ringdichtungen kommt.

Es ist die Aufgabe der vorliegenden Erfindung, ein Ventil bzw. ein Verfahren zur Herstellung eines Ventils vorzuschlagen, die von den oben aufgezeigten Nachteilen wenigstens teilweise befreit sind. Insbesondere soll ein Ventil vorgeschlagen werden, das leicht hergestellt werden kann und das bevorzugt verschleißarm über eine lange Zeitdauer betätigt werden kann. Ein Verfahren zur Herstellung eines solchen Ventils soll gleichermaßen vorgeschlagen werden.

Die besagten Aufgaben gemäß der Erfindung werden soweit als möglich durch ein Ventil gemäß dem Patentanspruch 1 bzw. gemäß dem Patentanspruch 2 gelöst. Ein entsprechendes Verfahren wird durch den Patentanspruch 10 vorgeschlagen.

Zweckmäßige Ausführungsformen gehen aus den Unteransprüchen hervor.

Die gemäß der Erfindung zu erzielenden Vorteile beruhen wenigstens teilweise auf einem Ventil, bei dem der Ventilstift aus Kunststoff hergestellt ist. Diese überraschend einfache Maßnahme führt dazu, daß die kritischen Eigenschaften der Bestandteile und insbesondere des Ventilstiftes herkömmlicher Ventile als galvanisches Element in Bezug auf den Ventilstift keinerlei Wirkung mehr haben.

Des weiteren sind die gemäß der Erfindung zu erzielenden Vorteile darin zu sehen, daß der Ventilstift in Bezug auf eine zweiteilige Federkammer durch deren grundsätzliche Herstellung bereits in situ durch die Zusammensetzung dieser Bestandteile die Spezifikationen des herzustellenden Ventils regelmäßig ohne jede Justierarbeit, Nacharbeitung oder sonstige aufwendige Bearbeitungstätigkeiten einhalten kann. Dieser Vorteil wird insbesondere durch die Zweiteiligkeit der Federkammer erzielt, wobei durch das einfache einfache Zusammensetzen der Federkammerbestandteile in bezug auf den Ventilstift bereits sämtliche erforderlichen Justagemaßnahmen automatisch getroffen worden sind.

Besondere Vorteile lassen sich dadurch erzielen, daß dem Ventilstift ein Schulterabschnitt zugeordnet wird, der den Ventilstift gegenüber der Federeinrichtung abstützt, um eine rücktreibende Kraft auf den Ventilstift und damit auf den Ventilteller auszuüben. Der gleiche Schulterabschnitt dient bevorzugt auch dazu, den Ventilstift in einer extremen Endposition, in der das Ventil maximal geöffnet ist, gegenüber der Federkammer abzustützen.

Um die Zusammensetzbarkeit des erfindungsgemäßen Ventils günstig zu beeinflussen, kann ein Distanzstück am Ventilstift vorgesehen werden, das den Schulterabschnitt umfaßt. Auf diese Weise ist es möglich, den Ventilstift einstückig mit dem Ventilteller auszubilden, in die Federkammer einzuführen und mittels des Distanzstückes mit dem Schulterabschnitt den Ventilstift gegenüber der Federkammer festzusetzen, wobei bevorzugt das Distanzstück auch noch dazu dient, die Federeinrichtung definiert anzuordnen bzw. gegenüber dem Ventilstift festzulegen. Natürlich kann der Schulterabschnitt auch als separater Körper bzw. als separate Scheibe vorgesehen bzw. am Ventilstift festgelegt werden. Dabei umfaßt der Ventilstift insbesondere eine Ausnehmung bzw. einen umfänglichen Einschnitt oder dergleichen, indem das Distanzstück bzw. der Schulterabschnitt festgelegt werden kann, um immer automatisch in eine wohldefinierte Stellung zu gelangen.

Bevorzugt ist es auch möglich, daß der Ventilstift einen Festlegungsabschnitt für die Federeinrichtung aufweist, und zwar bevorzugt in Verbindung mit dem Schulterabschnitt, so daß für diesen Fall das Distanzstück nicht erforderlich ist. Bei dieser Ausführungsform ist es jedoch nicht möglich, den Ventilteller einstückig mit dem Ventilstift auszubilden, da ansonsten der Ventilstift und die Federkammer nicht zusammengesetzt werden könnten. Für diesen Fall ist es erforderlich, daß der Ventilteller nachträglich an dem zugeordneten Ende der Ventilspindel angesetzt wird.

Für den Fall, daß das Distanzstück mit dem Schulterabschnitt vorgesehen wird, kann am Ende des Ventilstiftes der Ventilteller einstückig mit dem Ventilstift, wie bereits angedeutet, ausgebildet sein, wobei eine Dichteinrichtung als separates Teil oder als angeformtes bzw. angespritztes Teil aus einem Dichtmaterial, beispielsweise Gummi oder dergleichen, vorgesehen werden kann. Ganz besonders ist der Fall zu bevorzugen, in dem die Dichteinrichtung angeformt bzw. angespritzt ist, da eine derartige Fertigung eines Ventilstiftes mit angeformtem Ventilteller sowie angeformter Dichteinrichtung vollautomatisch ablaufen kann, ohne daß eine umständliche händische Arbeit erforderlich wäre.

Es sei darauf hingewiesen, daß das Distanzstück in besonders vorteilhafter Weise mit einer Rasteinrichtung versehen sein kann, beispielsweise in der Form einer teilweise ausgebildeten Fuge, so daß das Distanzstück beim Aufsetzen bzw. Aufschieben auf den Ventilstift gedehnt werden kann, um bei Erreichen des Festlegungsabschnittes am Ventilstift in diesen einzurasten.

Ist der Ventilteller als separater Abschnitt ausgebildet, kann an diesem dennoch die Dichteinrichtung angeformt bzw. angespritzt werden, beispielsweise mit einer Kunststoffspritztechnik oder dergleichen. Für diesen Fall ist der Ventilteller mit einem Anschlußbereich, beispielsweise einem zylinderförmigen Bereich, versehen, der auf das dem Ventilteller zugeordnete Ende des Ventilstiftes aufsteckbar ist.

Um trotz der einstückigen Anordnung des Ventiltellers mit oder ohne Dichteinrichtung und des Schulterabschnittes am Ventilstift die Montage mit der Federkammer und der Feder selbst zu ermöglichen, wird es bevorzugt, einen entsprechenden Ventilstift in einer zweiteiligen Form vorzuschlagen. Der eine Teil des zweiteiligen Ventilstiftes weist dann einstückig den Ventilteller auf, während der andere Teil den Schulterabschnitt aufweist. Die beiden Bestandteile des Ventilstiftes können dann jeweils in die korrespondierenden Bestandteile der Federkammer eingesetzt werden und anschließend mit der auf dem Ventilstift aufgefädelten Federeinrichtung zusammengefügt werden. Hier kann beispielsweise Klebstoff eingesetzt werden, ein Gewinde benutzt werden oder irgendwelche Rastlippen in Verbindung mit Rastrillen oder dergleichen eingesetzt werden. Gemäß dem Verfahren zur Herstellung bzw. Anordnung eines Ventils nach der Erfindung wird ein Ventilstift aus wenigstens zwei Stücken bzw. aus zwei Stücken mittels einer Kunststoff-Fertigungstechnik, beispielsweise einer Kunststoffguß- oder -spritzgußtechnik oder dergleichen hergestellt. Der so gefertigte Ventilstift wird mit einem Schulterabschnitt ausgebildet oder versehen. Eine Federeinrichtung wird auf den Ventilstift aufgesetzt, um gegen den Schulterabschnitt anzuliegen. Eine zweiteilige Federkammer wird dem Ventilstift zugeordnet, wobei die Federkammer den Schulterabschnitt und die Federeinrichtung im montierten Zustand einschließt. Die Abmessungen bzw. die Abmessungsverhältnisse zwischen dem Schulterabschnitt am Ventilstift, der zusammengesetzten Federkammer und dem Ventilstift werden so konzipiert, daß mit einer daran angepaßten Federeinrichtung vorgegebene Spezifikationen eines Ventils durch die Anordnung der besagten Komponenten automatisch erfüllt werden.

Dieses erfindungsgemäße Verfahren weist den Vorteil auf, daß durch die bevorzugt aus Kunststoff ausgebildeten Komponenten, die teils auch aus Metall hergestellt sein können, wobei die Federeinrichtung aus Federstahl oder dergleichen in der Regel hergestellt sein sollte, gewährleistet wird, daß durch den Zusammenbau der besagten Komponenten bereits sämtliche Justierarbeiten in situ ausgeführt sind und Nachbearbeitungen bzw. Justierarbeiten regelmäßig nicht anfallen.

In Bezug auf das Verfahren ist festzuhalten, daß die in den Sachansprüchen aufgeführten Sachmerkmale natürlich allesamt auch als Verfahrensmerkmale beansprucht werden können, da diese Sachmerkmal jeweils automatisch Merkmale eines Herstellungsverfahrens erfordern.

Für die Herstellung insbesondere des Ventilstiftes bzw. der Ventilspindel kommt ein Duroplast bzw. ein Thermoplast ganz besonders in Betracht.

Nachfolgend wird die vorliegende Erfindung anhand von bevorzugten Ausführungsbeispielen unter Bezugnahme auf die beigefügten Darstellungen näher beschrieben. Weitere Merkmale, Vorteile und Zielsetzungen gemäß der Erfindung gehen auch aus der beigefügten Figurenbeschreibung bzw. den beigefügten Figuren hervor. In den Darstellungen zeigen:
- Fig. 1: eine längsschnittliche Darstellung eines Ventils einer Ausführungsform mit Merkmalen gemäß der Erfindung;
- Fig. 1a: eine Detailansicht eines Bestandteils der Ausführungsform gemäß Fig. 1 in einer Schnittansicht und einer Draufsicht;
- Fig. 2: eine alternative zweite Ausführungsform mit Merkmalen gemäß der Erfindung in einer axialen längsschnittlichen Darstellung;
- Fig. 2a: einen Ventilstift der Ausführungsform gemäß Fig. 2 in einer Seitenansicht;
- Fig. 3: eine alternative Ausführungsform eines Ventilstiftes bzw. einer Ventilspindel mit Merkmalen gemäß der Erfindung in einer axialen längsschnittlichen Darstellung;
- Fig. 3a: einen Ausschnitt gemäß Fig. 3 in einer Seitenansicht;
- Fig. 4: einen Ventilstift bzw. eine Ventilspindel in einer axialen längsschnittlichen Darstellung, wie sie gemäß Fig. 1 zum Einsatz kommen kann; und
- Fig. 4a: eine Draufsicht auf den Ventilteller des Ventilstiftes bzw. der Ventilspindel gemäß Fig. 4.

In den Darstellungen sind gleiche oder ähnliche Bestandteile, die wenigstens von ihrer Funktion her vergleichbar sind, mit gleichen bzw. entsprechenden Bezugszeichen benannt (beispielsweise entspricht 26 den Bezugsziffern 126, 226, 326).

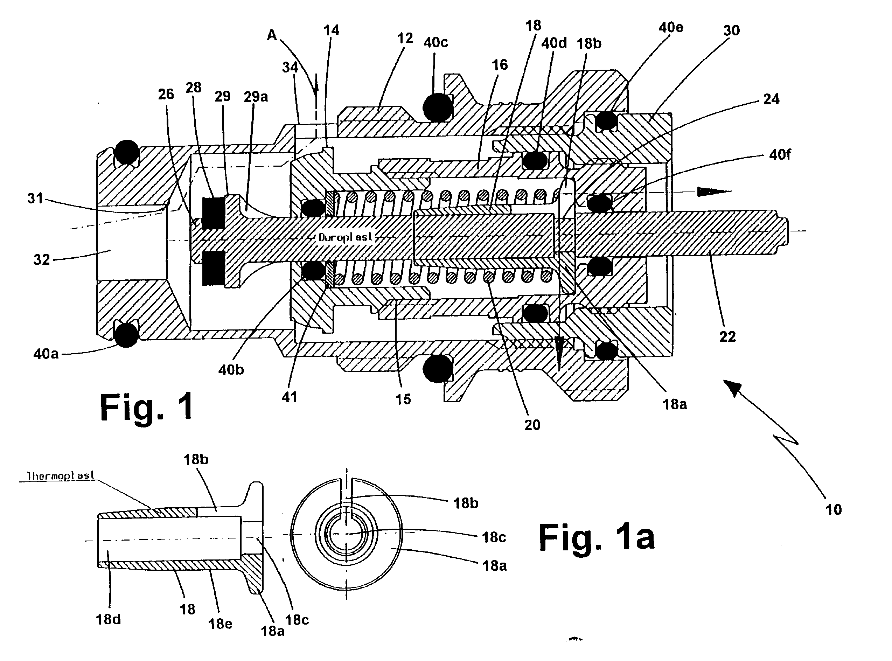

In Fig. 1 ist eine erste Ausführungsform eines Ventils 10, insbesondere eines Heizkörperventils 10, in einer axialen längsschnittlichen Darstellung gezeigt.

Ein Ventilgehäuse 12 weist einen Vorlauf 32 und einen Rücklauf 34 auf. Ein Heizmedium, dessen Durchfluß zu regeln ist, fließt der strichpunktierten Linie A folgend durch das Ventilgehäuse 12 hindurch. Am Außenumfang des Ventilgehäuses 12 sind O-Ringdichtungen 40a, 40c vorgesehen, über die das Ventil 10 dichtend in einen zugehörigen Ventiladapter an einem Heizkörper bzw. in einem Heizkörper eingesetzt werden kann. Innerhalb des Gehäuses 12 des Ventils 10 ist eine Federkammer 14, 16 vorgesehen, die mittels eines Schraubadapters 30 in dem Ventilgehäuse festgelegt ist. Auch hier sind O-Ringdichtungen 40d, 40e, die für einen dichten Einbau der Federkammer 14, 16 in das Gehäuse 12 bestimmt sind.

Innerhalb der Federkammer 14, 16, die zweiteilig ausgebildet ist, ist eine Federeinrichtung 20 angeordnet. Die Federeinrichtung 20 umschließt einen Ventilstift 22 bzw. eine Ventilspindel 22, die die gesamte Federkammer 14, 16 axial durchdringt. An den Enden der Federkammer 14, 16 ist der Ventilstift 22 über O-Ringdichtungen 40b, 40f dichtend gehalten, um ein Eindringen von Flüssigkeit bzw. Heizflüssigkeit in die Federkammer 14, 16 verhindern zu können. Dementsprechend ist auch ein Gewinde 15, über das die zweiteilige Federkammer 14, 16 zusammengeschraubt werden kann, ebenfalls nach Möglichkeit dicht auszubilden.

An dem Vorlauf 32 des Ventilgehäuses 12 ist ein Ventilsitz 31 vorgesehen, dem ein Ventilteller 29 an einem Ende des Ventilstiftes bzw. der Ventilspindel 22 zugeordnet ist. Der Ventilteller 29 ist einstückig mit dem Ventilstift 22 ausgebildet, das heißt bevorzugt mittels einer Kunststoffguß- bzw. -spritzgußtechnik einstückig aus Kunststoff hergestellt. Auf dem Ventilteller 29 ist gegenüber dem Ventilsitz 31 ein Dichtabschnitt 28 vorgesehen, der in einer zwischen einem Kopf 26 am Ende des Ventilstiftes 22 und dem Ventilteller 29 ausgebildeten Nut festgelegt ist. Die Dichtung 28 auf dem Ventilteller 29 kann jedoch auch mittels einer Spritzgußtechnik vorgesehen werden und muß nicht nachträglich händisch in die besagte Nut eingesetzt werden.

Auf der dem Ventilteller 29 gegenüberliegenden Seite des Ventilstiftes 22 kann ein Thermostatkopf bzw. eine Thermostatkapsel eines Thermostatventiles anschließen. Hier kann auch ein Stellknopf eines Heizkörperventils oder dergleichen angeordnet sind.

Der Ventilstift 22 ist mit einer Ausnehmung bzw. einer umfänglichen Nut 24 oder dergleichen ausgebildet, in die ein Schulterabschnitt 18a eingreift. Der Schulterabschnitt 18a kann als Teil eines Distanzstückes 18, jedoch auch separat ausgebildet sein. Das Distanzstück 18 weist einen Schlitz bzw. eine Dehnfuge 18b auf, die den bevorzugt zylindrischen Körper des Distanzstückes 18 wenigstens bereichsweise durchzieht. Soll das Distanzstück 18 auf die Ventilspindel 22 aufgesteckt werden, kann dies von der dem Ventilteller 29 gegenüberliegenden Seite des Ventilstiftes 22 her erfolgen, wobei über die Dehnfuge 18b es ermöglicht wird, das Distanzstück 18 aufzuweiten, so daß der Schulterabschnitt 18a über den Ventilstift 22 geschoben werden kann. Sobald der Schulterabschnitt 18a die Ausnehmung 24 an dem Ventilstift 22 erreicht hat, formt sich das Distanzstück 18 zu seiner Grundform zurück, so daß die Dehnfuge 18b wieder entlastet ist und das Distanzstück 18 und damit der Schulterabschnitt 18a sind in einer fest vorbestimmten Relation zu dem Ventilteller 29 auf dem Ventilstift 22 festgelegt. Bevor das Distanzstück in der besagten Form aufgesetzt wird, müssen bei dieser Ausführungsform das Teil 14 der Federkammer 14, 16, die O-Ringdichtung 40b und eine Unterlegscheibe 41 sowie die Federeinrichtung 20 auf den Ventilstift 22 aufgeschoben werden.

Sobald anschließend das Distanzstück 18 in der besagten Weise auf der Ventilspindel 22 bzw. dem Ventilstift 22 festgelegt ist, kann dann der Abschnitt 16 der Federkammer 14, 16 mit dem Abschnitt 14 der Federkammer zusammengefügt werden. Da sämtliche Bestandteile, die mit der Federkammer und dem Ventilstift in Verbindung stehen, bereits durch ihren Herstellungsprozeß wohldefinierte Abstandsrelationen bzw. Kraftspezifikationen zueinander haben, ist durch deren Montage eine leicht zusammensetzbare und in ihren Spezifikationen absolut reproduzierbare Ventilmontageeinheit zwangsläufig gegeben. Das Konzept der Erfindung beruht damit ganz besonders auf diesen Zusammenhängen.

Vorteilhafterweise sind die für die Einstellung des Strömungsquerschnittes gedachten Bestandteile aus einem Material, das aufgrund von Temperaturänderungen kaum eine oder gar keine thermische Ausdehnung erfährt, so daß keine Ungenauigkeiten durch ein temperaturbezogenes Eigenleben der Bestandteile des Ventils mit Merkmalen gemäß der Erfindung zu befürchten ist.

In der Fig. 1a ist das Distanzstück 18 der Ausführungsform 10 eines Ventils mit Merkmalen gemäß der Erfindung nochmals separat im Detail dargestellt. Deutlich ist in beiden Ansichten der Schlitz bzw. die Dehnfüge 18b zu erkennen, der dazu führt, daß das Distanzstück 18 im Bereich des Schulterabschnitts 18 aufgeweitet werden kann. Bei der Montage kann der Ventilstift 22 über die Öffnung 18d in das Distanzstück 18 eingesetzt werden, wobei unter Aufweitung des Schlitzes bzw. der Dehnfuge 18b der Ventilstift 22 durch eine Verengung 18c an dem Schulterabschnitt 18a hindurchgeführt werden kann.

Eine außenumfängliche Verdickung 18e am Distanzstück 18 kann dafür ausgebildet sein, daß dessen Außendurchmesser wenigstens in etwa gleich, insbesondere vollkommen gleich dem Innendurchmesser der Federeinrichtung 15 ist, so daß die Federeinrichtung ohne weitere Maßnahmen bei der Montage an dem Außenumfang des Distanzstückes festgelegt werden kann, so daß die Federeinrichtung immer in einer festen und wohldefinierten Position an dem Distanzstück zu liegen kommen kann.

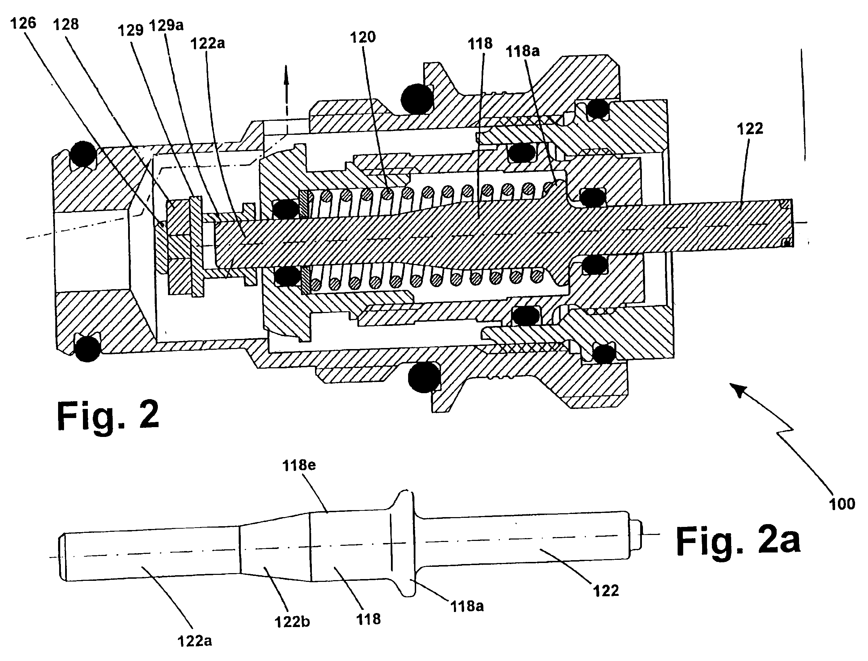

Die in Fig. 2 dargestellte Ausführungsform mit Merkmalen gemäß der Erfindung ist in bezug auf sämtliche Bestandteile, die in der Darstellung nicht mit Bezugszeichen versehen sind, identisch oder wenigstens funktionsgleich zu den entsprechenden Bestandteilen gemäß Fig. 1.

Demgemäß ist in Fig. 2 lediglich der Ventilstift bzw. die Ventilspindel 122 mit dem Ventilteller 129 abweichend zu der Ausführungsform gemäß Fig. 1 ausgebildet.

Der Ventilstift 122 ist hier einstückig mit der Form eines Distanzstückes 18 ausgebildet, das hier durch das Bezugszeichen 118 benannt ist. Dementsprechend ist der Ventilstift 122 hier auch selbst mit dem Schulterabschnitt 118a ausgebildet, der auf einer Seite an einem Endabschnitt der Federkammer 14, 16 anliegt und gegen den auf der anderen Seite die Federeinrichtung 120 anliegt.

Um die Montierbarkeit des Ventilstiftes 122 zu gewährleisten, ist bei dieser Ausführungsform der Ventilteller 129 als separates Teil ausgebildet, das an dem oberen Endabschnitt 122a des Ventilstiftes bzw. der Ventilspindel 122 festgelegt werden kann. Der Ventilteller 129 weist an seinem dem Ende 122a des Ventilstiftes 122 zugeordneten Bereich eine zylindrisch geformte bzw. topfartig geformte Erstreckung 129a auf, über die der Ventilteller 129 auf dem Ende 122a des Ventilstiftes 122 festgesteckt werden kann. Auch hier kann durch einfaches Aufstecken eine ganz bestimmte Abstandsrelation bzw. können ganz bestimmte Abmessungen ohne Justierung und ohne Bearbeitung der Bestandteile ermöglicht werden. Der Ventilteller 129 wird auch hier mit einem Dichteabschnitt 128 versehen, der an dem Ventilteller 129 über den Tellerkopf 126 festgelegt ist.

Unter Bezugnahme auf Fig. 2a ist auf einen abgeschrägten Abschnitt 122b zu verweisen, der das Aufschieben der Federeinrichtung 120 auf den Distanzstückabschnitt 118 vereinfacht. Einen entsprechenden Abschnitt weist auch das Distanzstück gemäß den Fig. 1, 1a auf.

Wie bereits angedeutet, stimmt ansonsten das Ventil 100 mit Merkmalen gemäß der Erfindung im wesentlichen mit der Ventileinrichtung 10 gemäß den Fig. 1, 1a überein.

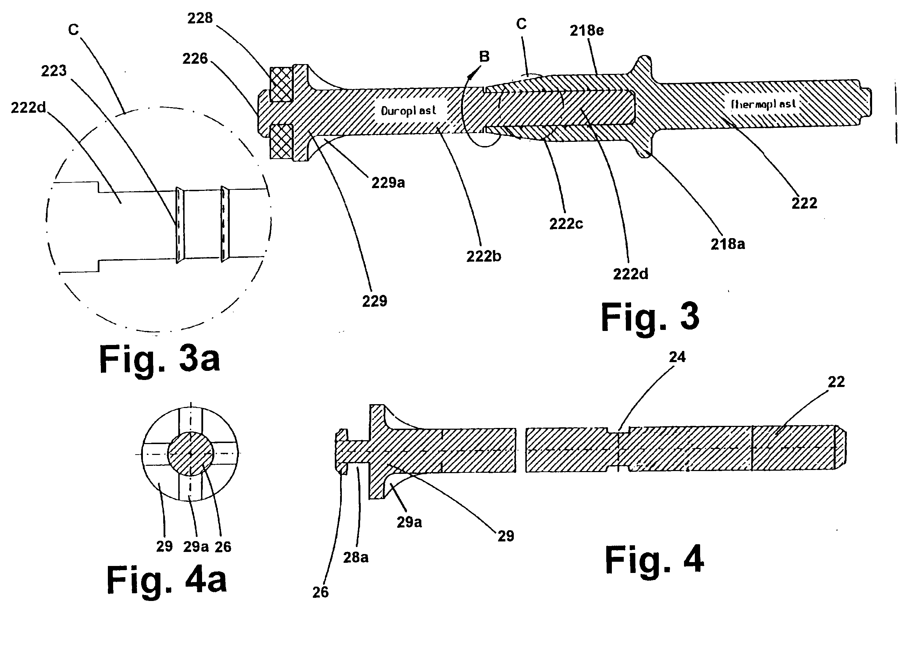

In der Fig. 3 ist eine weitere Variante eines Ventilstiftes bzw. einer Ventilspindel 222 zu erkennen. In bezug auf den Ventilteller 229 ist lediglich auf die Verstärkungsverstrebungen 229a hinzuweisen, die im Falle des Anpressens gegen den Ventilsitz den Ventilteller 229 stabilisieren sollen. In bezug auf die Dichteinrichtung 228 und den Tellerkopf 226 stimmt diese Ventilspindel bzw. dieser Ventilstift gemäß Fig. 3 ansonsten mit dem Ventilstift gemäß der Ausführungsform nach Fig. 1, 1a überein. Jedoch ist die Ventilspindel bzw. der Ventilstift 222 gemäß Fig. 3 in zwei Abschnitte, einen dem Ventilteller 229 zugeordneten Abschnitt 222b und den dem gegenüberliegenden Ende des Ventilstiftes zugeordneten Abschnitt 222 unterteilt. Dabei weist der dem Ventilteller zugeordnete Abschnitt 222b einen verjüngten Bereich 222d auf, der in den distanzstückförmigen Bereich 218e, 218a des Abschnittes 222 eingesetzt werden kann. Dies kann beispielsweise mittels eines Gewindes durch Drehen des Abschnittes 222b in der Richtung B erfolgen.

In Fig. 3a sind Rasterstreckungen 223 in dem verjüngten Bereich 222d zu erkennen, die zum formschlüssigen Eingriff in entsprechende Ausnehmungen an dem Innenumfang des distanzstückförmigen Abschnitts 218e des Abschnitts 222 des Ventilstiftes gemäß Fig. 3 ausgebildet sind.

Die Fig. 4 und 4a zeigen nochmals losgelöst von Fig. 1 den Ventilstift bzw. die Ventilspindel. Dabei greift das Distanzstück gemäß Figur 1a in die Ausnehmung 24 des ansonsten bevorzugt durchgängigen, d.h., einstückigen Ventilstiftes.

Wie aus den Darstellungen deutlich zu erkennen ist, ist wenigstens die Ventilspindel aus Kunststoff, insbesondere einem Duroplast, so daß der Ventilstift als galvanisch aktives Element in einem Ventil 10, 100 mit Merkmalen gemäß der Erfindung ausscheidet. Dementsprechend läßt sich gemäß der Erfindung ein überraschend einfaches Ventil äußerst kostengünstig herstellen, das auch unter schwierigsten Bedingungen, das heißt einem chemisch sehr aktiven Heizmedium, langlebig und beständig ist.

Die Federkonstante der in das Ventil einzusetzenden Feder ist auf die gewünschte Regelcharakteristik abzustimmen. Da die von der Federeinrichtung ausgeübte Kraft von der Vorspannung in der Federkammer 14, 16 abhängt, ist die Federkonstante zu dem der Feder verbleibenden Raum in der Federkammer in ein passendes Verhältnis zu setzen, um die nötigen Rücktriebskräfte durch die Feder bereitstellen zu können.

## Patentansprüche

1. Ventil, insbesondere Heizkörperventil oder Thermostatventil, mit den folgenden Merkmalen:
a) einer Federeinrichtung (20, 120);
b) einem Ventilstift (22, 122, 222), der von der Federeinrichtung (20, 120) vorbelastet werden kann;
c) einem Ventilteller (26, 28, 29) am Endbereich des Ventilstiftes;
**gekennzeichnet** durch das folgende Merkmal:
d) der Ventilstift ist aus Kunststoff hergestellt.

2. Ventil, insbesondere Heizkörperventil oder Thermostatventil, nach dem Oberbegriff des Anspruches 1 oder nach dem Patentanspruch 1, **gekennzeichnet** durch das folgende Merkmal:
eine Federkammer (14, 16), die die Federeinrichtung (20) aufnimmt und die den Ventilstift (22) bereichsweise umgibt, wobei die Federkammer zweistückig (14, 16) ausgebildet ist.

3. Ventil nach einem der Ansprüche 1 oder 2, dadurch **gekennzeichnet,** daß dem Ventilstift ein Schulterabschnitt (18a, 118a, 218a) zugeordnet ist, der den Ventilstift (22, 122, 222) gegenüber der Federeinrichtung (20, 120) abstützt bzw. gegenüber der Federkammer abstützt.

4. Ventil nach Anspruch 3, dadurch **gekennzeichnet,** daß ein Distanzstück (18) an dem Ventilstift vorgesehen ist, das den Schulterabschnitt (18a, 118a, 218a) umfaßt oder wobei das Distanzstück (18) bevorzugt einen Federeinrichtungs-Festlegungsabschnitt (18e) aufweist, um das Distanzstück und damit den Ventilstift in einer festen Relation zur Federeinrichtung zu halten, daß der Schulterabschnitt (118a, 218a) am Ventilstift vorgesehen ist.

5. Ventil nach Anspruch 3, dadurch **gekennzeichnet,** daß der Ventilstift einen Festlegungsabschnitt (24, 324) aufweist, an dem der Schulterabschnitt bzw. das Distanzstück festlegbar ist.

6. Ventil nach einem der Ansprüche 1 bis 5, dadurch **gekennzeichnet,** daß der Ventilstift einen Federeinrichtungs-Festlegungsabschnitt (218e) aufweist, um den Ventilstift in einer festen Relation zur Federeinrichtung zu halten, wobei insbesondere der Ventilteller am Ende des Ventilstiftes einstückig mit dem Ventilstift ausgebildet ist, wobei eine Dichteinrichtung (28) als separates Teil oder als angeformtes bzw. angespritztes Teil aus einem Dichtmaterial, beispielsweise Gummi oder dergleichen, vorgesehen ist.

7. Ventil nach einem der Ansprüche 4 bis 6, dadurch **gekennzeichnet,** daß das Distanzstück (18) wenigstens abschnittsweise eine Dehnfuge bzw. einen Spalt (18b) oder dergleichen aufweist, um eine Verrastung mit dem Ventilstift (22) zu ermöglichen.

8. Ventil nach einem der Ansprüche 1 bis 7, dadurch **gekennzeichnet,** daß der Ventilteller als separater Abschnitt (126, 128, 129, 129a) ausgebildet und an dem zugeordneten Ende des Ventilstiftes (122) festlegbar ist, wobei der Ventilteller bevorzugt einen Anschlußbereich, beispielsweise einen zylinderförmigen Bereich (129a) hat, der auf das zugeordnete Ende des Ventilstiftes aufsteckbar ist.

9. Ventil nach einem der Ansprüche 1 bis 6 bzw. 8, dadurch **gekennzeichnet,** daß der Ventilstift zwei Abschnitte (222, 222b) umfaßt, die zusammensetzbar sind, wobei der dem Ventilteller (229) zugeordnete Abschnitt (222b) und/oder der andere Abschnitt (222) an dem Fügebereich (222d) bevorzugt Verbindungsmittel (223) aufweisen.

10. Verfahren zur Anordnung eines Ventils, insbesondere gemäß einem der voranstehenden Ansprüche, **gekennzeichnet** durch die folgenden Schritt zur Anordnung von Komponenten:
a) ein Ventilstift (22) wird aus wenigstens einem Stück mittels einer Kunststoffguß-oder -spritzgußtechnik oder dergleichen hergestellt;
b) ein Schulterabschnitt (18a) wird an den Ventilstift angeformt bzw. angesetzt;
c) eine Federeinrichtung (20) wird auf den Ventilstift aufgesetzt, um gegen den Schulterabschnitt anzuliegen;
d) eine zweiteilige Federkammer (14, 16) wird an dem Ventilstift, dem Schulterabschnitt (18a) und die Federeinrichtung (20) umgebend angeordnet; und
e) die Abmessungsverhältnisse zwischen dem Schulterabschnitt (18a) am Ventilstift, der zusammengesetzten Federkammer (14, 16) und dem Ventilstift werden so ausgelegt, daß mit einer daran angepaßten Federeinrichtung vorgegebene Spezifikationen eines Ventils durch die Anordnung der Komponenten erfüllt werden.
